# EUROPÄISCHE PATENTSCHRIFT

(11) **EP 0 822 211 B1**
(45) Veröffentlichungstag und Bekanntmachung des Hinweises auf die Patenterteilung: **03.03.2004**
(21) Anmeldenummer: 97112449.0
(22) Anmeldetag: 21.07.1997
(51) Int. Cl.: C08G 18/80

(54) **Mit 3,5-Dimethyl-1,2,4-triazol blockierte Polyisocyanate**
3,5-Dimethyl-1,2,4-triazole-blocked polyisocyanates
Polyisocyanates bloqués par le 3,5-diméthyl-1,2,4-triazole

(30) Priorität: 02.08.1996 DE 19631269
(43) Veröffentlichungstag der Anmeldung: 04.02.1998
(73) Patentinhaber: Bayer MaterialScience AG, 51368 Leverkusen (DE)
(72) Erfinder: Kurek, Gerald, Dr., 51373 Leverkusen (DE); König, Eberhard, Dr., 51375 Leverkusen (DE); Nachtkamp, Klaus, Dr., 40593 Düsseldorf (DE); Engbert, Theodor, Dr., 50968 Köln (DE)

(56) Entgegenhaltungen:
- EP-A- 0 682 051
- WO-A-93/23447
- US-A- 3 721 645

## Beschreibung

Die Erfindung betrifft neue blockierte Polyisocyanate, die die Herstellung von, bei vergleichsweise niedrigen Temperaturen von 120 - 140 °C einbrennbaren, Einkomponenten-Polyurethan-Lacken mit einer sehr niedrigen Thermovergilbung gestatten, ein Verfahren zu ihrer Herstellung und ihre Verwendung.

Mehrschichtlackierungen, die als Decklack einen glänzenden Klarlack auf Basis von blockierten Polyisocyanaten und organischen Polyhydroxylverbindungen, beispielsweise Polyhydroxypolyacrylaten aufweisen, gewinnen wegen ihrer ausgezeichneten lacktechnischen Eigenschaften, insbesondere bei der Automobillackierung, immer größere Bedeutung.

Für dieses spezielle Einsatzgebiet geeignete blockierte Polyisocyanate müssen insbesondere (i) bei einer Einbrenntemperatur von max. 140 °C vernetzbar sein, (ii) während des Einbrennvorgangs allenfalls eine sehr geringe, vorzugsweise überhaupt keine Thermovergilbung aufweisen und (iii) in konzentrierter organischer Lösung eine für "high solid"-Anwendungen ausreichend niedrige Viskosität aufweisen und (iv) auf preisgünstigen Rohstoffen basieren.

Mit Triazolen und Pyrazolen blockierte Polyisocyanate sind besonders für Einbrennlacke mit geringer Thermovergilbung geeignet. Die 1,2,4-Triazol-blockierten Polyisocyanate gemäß EP-A 0 004 571, die insbesondere als Pulverlack-Vemetzer in Betracht gezogen werden, sind für einen Einsatz in Lösemittel enthaltenden Lacken weitgehend ungeeignet, da ihre Lösungen in organischen Lösemitteln vergleichsweise hochviskos und oftmals wegen der Kristallisationsneigung der blockierten Polyisocyanate instabil sind.

Zwar kann diese Kristallisationsneigung gemäß EP-A 0 682 051 durch Verwendung eines Blockierungsmittelgemisches aus 1,2,4-Triazol und 3,5-Dimethylpyrazol unterdrückt werden, jedoch stellt diese Mischblockierung einen zusätzlichen technischen Aufwand dar.

In der US-A 3 721 645 werden 1,2,4-Triazole, u.a. 3-Ethyl-1,2,4-triazol, als Stabilisierungszusätze für PUR-Schmelzguß-Massen genannt. Die Herstellung von Isocyanaten, deren NCO-Gruppen mit 3,5-Dimethyl-1,2,4-triazol blockiert sind, wird nicht dargelegt.

Aufgabe dieser Erfindung war es nun, solche blockierten Polyisocyanate zu entwickeln, die die vorstehend genannten Bedingungen, nämlich niedrige Einbrenntemperaturen, geringe oder keine Thermovergilbung, niedrige Viskosität in konzentrierter organischer Lösung und leicht zugängliche, preisgünstige Rohstoffe für die Synthese, erfüllen.

Jetzt wurde überraschend gefunden, daß diese Bedingungen in optimaler Weise durch mit 3,5-Dimethyl-1,2,4-triazol blockierte Polyisocyanate erfüllt werden.

Gegenstand der Erfindung sind organische Polyisocyanate mit mindestens zwei Isocyanatgruppen, deren Isocyanatgruppen zu mindestens 95 % in blockierter Form vorliegen, und die einen Gehalt an blockierten und gegebenenfalls freien Isocyanatgruppen (berechnet als NCO, MG = 42 g) von insgesamt 2 bis 26 Gew.-%, vorzugsweise 4 bis 26 Gew.-%, ganz besonders bevorzugt 8 bis 20 Gew.-% (bezogen auf den Festkörpergehalt der Lösung) aufweisen, dadurch gekennzeichnet, daß als Blockierungsmittel 3,5-Dimethyl-1,2,4-triazol Verwendung findet.

Gegenstand der Erfindung ist auch ein Verfahren zur Herstellung dieser Polyisocyanate, gegebenenfalls in in Lacklösemitteln gelöster Form, durch Umsetzung einer, gegebenenfalls in Lacklösemitteln gelösten Polyisocyanatkomponente, bestehend aus mindestens einem organischen Polyisocyanat und mindestens zwei Isocyanatgruppen und einem Isocyanatgehalt von 2 bis 60 Gew.-%, mit einem Blockierungsmittel bei 50 bis 120 °C, wobei das Blockierungsmittel in einer Gesamtmenge von mindestens 95 Äquivalent-%, bezogen auf die Isocyanatgruppen der zu blockierenden Polyisocyanate, zur Anwendung gelangt, dadurch gekennzeichnet, daß als Blockierungsmittel 3,5-Dimthyl-1,2,4-triazol Verwendung findet.

Gegenstand der Erfindung ist schließlich auch die Verwendung der erfindungsgemäßen blockierten Polyisocyanate mit überwiegend oder ausschließlich blockierten Isocyanatgruppen als Vernetzer für organische Polyhydroxyl-, Polyamino- und Polyaminopolyhydroxylverbindungen in Polyurethan-Einkomponenten-Einbrennlacken.

Bei den erfindungsgemäßen Polyisocyanaten handelt es sich um an sich bekannte, insbesondere technisch vorhandene aromatische und (cyclo)aliphatische Polyisocyanate mit mindestens zwei Isocyanatgruppen. Beispielhaft genannt seien 2,4-und 2,6-Toluylendiisocyanat (TDI), 4,4'-Diphenylmethandiisocyanat (MDI) bzw Roh-MDI, Xylylendiisocyanat (XDI), 1,4-Butandiisocyanat (BDI), 1,6-Hexandiisocyanat (HDI), 2,4(6)-Methylcyclohexyldiisocyanat (H₆TDI), Isocyanato-3,3,5-trimethyl-5-isocyanatomethyl-cyclohexan (Isophorondiisocyanat, IPDI), 4,4'-Dicyclohexylmethandiisocyanat, 3(4)-Isocyanatomethyl-1-methylcyclohexylisocyanat (IMCI), sowie von diesen sich ableitende Polyisocyanate mit Prepolymerstruktur oder Biuret-, Allophanat-, Isocyanurat-und/oder Uretdiongruppen.

Bevorzugt sind (cyclo)aliphatische Lackpolyisocyanate mit Biuret-, Isocyanurat-, Allophanat- und/oder Uretdiongruppen auf Basis von 1,6-Hexandiisocyanat, Isophorondiisocyanat und 4,4'-Dicyclohexylmethandiisocyanat.

Besonders bevorzugt sind hierbei die über Isocyanurat-, Allophanat- und/oder Biuretgruppen verfügbaren Lackpolyisocyanate auf Basis von 1,6-Hexandiisocyanat.

Als Blockierungsmittel findet 3,5-Dimethyl-1,2,4-triazol alleine oder zusammen im Gemisch mit einem oder mehreren anderen, an sich bekannten Blockierungsmitteln Verwendung, wobei der Anteil an 3,5-Dimethyl-1,2,4-triazol im erfindungsgemäßen Gemisch mindestens 50 Gew.-%, bevorzugt mindestens 80 Gew.-% und besonders bevorzugt 100 Gew.-% beträgt. 3,5-Dimethyl-1,2,4-triazol ist ein farbloser, nadelförmig kristallisierender Feststoff mit einem Molgewicht von 97,12 g (Fp. 144°C, Kp. 159°C/15 mbar). Diese Verbindung kann gemäß einiger bekannter Syntheseverfahren hergestellt werden (Beilstein, Handbuch der Org. Chemie, E V, 26/1, S. 267; Res. Discl. 1981, 360), z. B. durch Umsetzung von 1 Mol Hydrazinhydrat mit mindestens 2 Mol Acetamid im Temperaturbereich 90 - 220°C.

Das 3,5-Dimethyl-1,2,4-triazol enthaltende Blockierungsmittel wird bei der Durchführung des erfindungsgemäßen Verfahrens in solchen Mengen eingesetzt, daß das Äquivalentverhältnis von Isocyanatgruppen der Ausgangspolyisocyanate zum Blockierungsmittel bei 0,95:1 bis 1,05:1 liegt. Die Isocyanatgruppen der erfindungsgemäßen Polyisocyanate sind demzufolge zumindest zu 95 %, vorzugsweise vollständig, blockiert.

Die Durchführung des erfindungsgemäßen Verfahrens erfolgt im allgemeinen im Temperaturbereich von 50 bis 120°C, vorzugsweise 80 bis 110°C (in Substanz oder) in geeigneten Lösemitteln wie beispielsweise n-Butylacetat, Methoxypropylacetat, Toluol oder höheren aromatischen Lösemittelgemischen, wie sie beispielsweise von der Firma Exxon-Chemie unter der Bezeichnung Solvesso® vertrieben werden.

Beispielsweise kann das erfindungsgemäße Verfahren nach folgender Verfahrensvariante durchgeführt werden: Man legt die gelöste oder reine Polyisocyanatkomponente zusammen mit der berechneten Menge an 3,5-Dimethyl-1,2,4-triazol sowie der zur Einstellung des gewünschten Festkörpergehaltes benötigten Menge an Lösemittel vor und erhitzt dieses Gemisch unter Rühren so lange bei 100°C, bis der kalkulierte NCO-Gehalt erreicht ist bzw. - bei vollständiger Blockierung - sich nur noch ein NCO-Gehalt von unter 1 %, vorzugsweise von 0,2 % nachweisen läßt. Gegebenenfalls wird mit weiterem Lösungsmittel auf die gewünschte Viskosität eingestellt.

Der Vorteil der erfindungsgemäßen Vernetzer wird, wie im folgenden noch in den Beispielen 1 und 4 näher erläutert wird, bei der Blockierung von Polyisocyanaten, die auf HDI basieren, offenkundig. Diese Polyisocyanate, mit 1,2,4-Triazol blockiert, führen ausnahmslos zu hochviskosen, nach kürzerer Lagerzeit auskristallisierenden Vernetzern, die für den Einsatz als lagerfähige 1K-PUR-Einbrennlacke unbrauchbar sind. Auf HDI basierende Lackpolyisocyanate, die mit 3,5-Dimethyl-1,2,4-triazol blockiert sind, sind hingegen lagerstabile und niedrigviskose Vernetzerkomponenten.

Die erfindungsgemäßen, überwiegend bzw. vollständig blockierten Polyisocyanate stellen wertvolle Vernetzerharze für organische Polyhydroxylverbindungen bei der Herstellung von Einbrennlacken dar. Sie können hierbei anstelle der bislang für diesen Zweck verwendeten blockierten Polyisocyanate eingesetzt werden. Geeignete Polyhydroxylverbindungen für diesen Einsatzzweck, sowie weitere Details bezüglich der Herstellung und Anwendung derartiger Einbrennlacke können der Literatur entnommen werden. Besonders bevorzugtes Anwendungsgebiet für die erfindungsgemäßen Produkte ist ihre Verwendung als Vernetzer für Einbrenn-Polyurethanklarlacke, wie sie als Decklack, insbesondere bei der Automobil-Mehrschichtlackierung, zur Anwendung gelangen, wobei als Reaktionspartner für die erfindungsgemäßen blockierten Polyisocyanate die an sich bekannten Polyesterpolyole, Polyacrylatpolyole oder deren Gemische verwendet werden.

### Beispiele

In den nachfolgenden Beispielen beziehen sich alle Prozentangaben, soweit nichts anderslautendes angemerkt, auf das Gewicht.

Die Beispiele 1 und 4 bzw. 2 und 5 demonstrieren die bessere Kristallisationsbeständigkeit bzw. die niedrigere Viskosität der erfindungsgemäß mit 3,5-Dimethyl-1,2,4-triazol blockierten Polyisocyanate gegenüber den mit 1,2,4-Triazol blockierten Polyisocyanaten.

In Beispiel 6 werden Klarlackkombinationen mit dem blockierten Vernetzer aus dem Vergleichsbeispiel 3 (mischblockiertes Polyisocyanat gemäß EP 0 682 051 A2) und dem erfindungsgemäßen blockierten Vernetzer aus Beispiel 4 sowie die Thermovergilbung, Pendeldämpfung und Lösemittelfestigkeit beschrieben.

### Beispiel 1 (Vergleichsbeispiel)

Dieses Beispiel beschreibt die Blockierung eines typischen Lackpolyisocyanates auf Basis von 1,6-Diisocyanatohexan mit 1,2,4-Triazol. Es resultiert ein unbrauchbares, da kristallisierendes Produkt.

### Ansatz:

| | | |
|---|---|---|
| 200,0 g | (1,0 Val) | eines isocyanurathaltigen Lackpolyisocyanates auf Basis von 1,6-Diisocyanatohexan. NCO-Gehalt: 21 %, Viskosität bei 23°C ca. 3 000 mPas |
| 72,5 g | (1,05 Mol) | 1,2,4-Triazol |
| 117,0 g | | Methoxypropylacetat |
| 389,5 g | (1,0 Val blockierte NCO-Gruppen) | |

### Durchführung:

Das obengenannte, Lösemittel-freie Lackpolyisocyanat wird im Methoxypropylacetat gelöst. Bei Raumtemperatur gibt man dann zu der gerührten Lösung die Gesamtmenge des 1,2,4-Triazols und erhitzt allmählich auf 100 °C. Hierbei geht das Blockierungsmittel in Lösung. Die Lösung wird während einer weiteren Stunde bei 100°C gerührt. Nach Verschwinden der NCO-Bande (IR-Spektrum) läßt man abkühlen. Während dieses Abkühlens wird die Lösung trüb, nach Lagerung über Nacht tritt vollständige Kristallisation ein.

### Beispiel 2 (Vergleichsbeispiel)

Dieses Beispiel beschreibt die Blockierung eines typischen Lackpolyisocyanates auf Basis von IPDI mit 1,2,4-Triazol. Es resultiert ein blockiertes Lackpolyisocyanat mit einer für high solid Anwendungen zu hohen Viskosität.

### Ansatz:

| | | |
|---|---|---|
| 350,0 g | (1,0 Val) | eines isocyanurathaltigen Lackpolyisocyanates auf Basis von IPDI, 70 %ig, gelöst in Solventnaphtha 100, NCO-Gehalt: 12 %, Viskosität bei 23°C ca. 150 mPas |
| 72,5 g | (1,05 Mol) | 1,2,4-Triazol |
| 65,0 g | | Methoxypropylacetat |
| 487,5 g | (1,0 Val blockierte NCO-Gruppen) Gehalt an blockierten NCO-Gruppen: Ber. 8,6 %, Festkörpergehalt: 65 % | |

### Durchführung:

Das obige Lackpolyisocyanat und Methoxypropylacetat werden vorgelegt und gerührt. Hierzu gibt man allmählich das in Form von weißen Schuppen vorliegende 1,2,4-Triazol und erwärmt unter Rühren auf 100°C. Nach einer Umsetzungsdauer von ca. 6 Stunden ist IR-spektroskopisch fast kein Gehalt an NCO-Gruppen mehr festzustellen. Man läßt erkalten und erhält eine klare, blaß gelb gefärbte Lösung des blockierten Polyisocyanates. Diese 65 %ige Lösung weist bei 23°C eine Viskosität von 60 000 mPas auf.

### Beispiel 3 (Vergleichsbeispiel)

Dieses Beispiel beschreibt eine Mischblockierung anhand des in Beispiel 1 verwendeten Polyisocyanates auf Basis von 1,6-Diisocyanatohexan. Im Unterschied zu Beispiel 1 entsteht aber hier ein flüssiges, nicht kristallisierendes blockiertes Lackpolyisocyanat.

### Ansatz:

| | | |
|---|---|---|
| 400,0 g | (2,0 Val) | eines isocyanurathaltigen Lackpolyisocyanates auf Basis von 1,6-Diisocyanatohexan gemäß Beispiel 1 |
| 69,0 g | (1,0 Mol) | 1,2,4-Triazol |
| 96,0 g | (1,0 Mol) | 3,5-Dimethylpyrazol |
| 242,0 g | | Methoxypropylacetat |
| 807,0 g | (2,0 Val blockierte NCO-Gruppen) Festkörpergehalt: 70 % Gehalt an blockierten NCO-Gruppen: Ber. 10,4 % | |

### Durchführung:

Polyisocyanat und Methoxypropylacetat werden vorgelegt. Unter Rühren wird festes 1,2,4-Triazol (weiße Flocken) hinzugegeben. Man erhitzt auf 100°C, wobei 1,2,4-Triazol in Lösung geht. Nach einer Umsetzungsdauer von 30 min wird ein NCO-Gehalt von 5,5 % gemessen (berechnet 5,9 %). Man kühlt auf 70°C ab und gibt portionsweise 3,5-Dimethylpyrazol (farblose Kristalle) hinzu. Nach 30 min Umsetzungsdauer bei 70°C ist IR-spektroskopisch kein NCO-Gehalt mehr nachweisbar. Man erhält eine klare, hellgelbe 70 %ige Lösung mit einer Viskosität bei 23°C von ca. 3 000 mPas. Das gelöste, blockierte Polyisocyanat weist einen Gehalt an blockierten NCO-Gruppen (berechnet als NCO und bezogen auf Feststoff) von 14,8 % auf. Die Eigenschaften eines mit diesem blockierten Lackpolyisocyanat hergestellten Klarlackes werden in Beispiel 6 beschrieben.

### Beispiel 4 (erfindungsgemäß)

Dieses Beispiel beschreibt die erfindungsgemäße Blockierung anhand des in Beispiel 1 verwendeten Polyisocyanates auf Basis von 1,6-Diisocyanatohexan. Im Unterschied zu Beispiel 1 entsteht aber hier ein flüssiges, nicht kristallisierendes blockiertes Lackpolyisocyanat.

### Ansatz:

| | | |
|---|---|---|
| 200,0 g | (1,0 Val) | eines isocyanurathaltigen Lackpolyisocyanates auf Basis von 1,6-Diisocyanatohexan gemäß Beispiel 1 |
| 101,9 g | (1,05 Mol) | 3,5-Dimethyl-1,2,4-triazol |
| 129,4 g | | Methoxypropylacetat |
| 431,3 g | (1,0 Val blockierte NCO-Gruppen) Festkörpergehalt: 70 % Gehalt an blockierten NCO-Gruppen: Ber. 9,7 % | |

### Durchführung:

Polyisocyanat und Methoxypropylacetat werden vorgelegt. Unter Rühren wird das feste 3,5-Dimethyl-1,2,4-triazol hinzugegeben. Man erhitzt auf 110°C, wobei das 3,5-Dimethyl-1,2,4-triazol in Lösung geht. Nach 8 h Umsetzungsdauer bei 110°C wird IR-spektroskopisch nur noch ein geringer NCO-Gehalt von weniger als 0,2 % gemessen. Man läßt auf Raumtemperatur abkühlen und über Nacht stehen, wobei die Umsetzung vollständig wird (IR-spektroskopisch keine NCO-Gruppen mehr nachweisbar). Man erhält eine klare, blaßgelbe 70 %ige Lösung mit einer Viskosität von 3800 mPas bei 23°C. Das gelöste, blockierte Polyisocyanat weist einen Gehalt an blockierten NCO-Gruppen (berechnet als NCO) von 9,7 %, bezogen auf Lösung, und 13,9 %, bezogen auf Feststoff, auf.

Die Eigenschaften eines mit diesem blockierten Lackpolyisocyanat hergestellten Klarlackes werden in Beispiel 6 beschrieben.

### Beispiel 5 (erfindungsgemäß)

Dieses Beispiel beschreibt die erfindungsgemäße Blockierung anhand des in Beispiel 2 verwendeten Polyisocyanates auf Basis von IPDI. Im Unterschied zu Beispiel 2 entsteht hier ein vergleichsweise niedrigviskoses blockiertes Polyisocyanat.

### Ansatz:

| | | |
|---|---|---|
| 355,0 g | (1,0 Val) | eines isocyanurathaltigen Lackpolyisocyanates auf Basis von IPDI, 70 %ig gelöst in Solventnaphtha 100 |
| 101,9 g | (1,05 Mol) | 3,5-Dimethyl-1,2,4-triazol |
| 82,1 g | | Methoxypropylacetat |
| 539,0 g | (1,0 Val blockierte NCO-Gruppen) | |

### Durchführung:

Das gelöste Polyisocyanat und Methoxypropylacetat werden vorgelegt. Man erhitzt auf 110°C, wobei das 3,5-Dimethyl-1,2,4-triazol in Lösung geht. Nach 8 h Umsetzungsdauer bei 110°C wird IR-spektroskopisch nur noch ein geringer NCO-Gehalt von weniger als 0,2 % gemessen.

Man läßt auf Raumtemperatur abkühlen und über Nacht stehen, wobei die Umsetzung vollständig wird (IR-spektroskopisch keine NCO-Gruppen mehr nachweisbar). Man erhält eine klare, blaßgelbe 65 %ige Lösung mit einer Viskosität von 26 000 mPas bei 23°C.

Das gelöste, blockierte Polyisocyanat weist einen Gehalt an blockierten NCO-Gruppen (berechnet als NCO) von 7,8 % bezogen auf Lösung und 12,0 % bezogen Feststoff auf.

Vergleich der Viskositäten:

| | |
|---|---|
| Beispiel 2 (Vergleichsbeispiel) | η = 60 000 mPas/23°C |
| Beispiel 5 (erfindungsgemäß) | η = 26 000 mPas/23°C |

Die Bestimmung der Viskositäten erfolgte mit einem Rotationsviskosimeter VT 181 der Fa. Haake Meßtechnik GmbH & Co.

### Beispiel 6 (erfindungsgemäß)

Es werden Klarlackkombinationen mit dem blockierten Vernetzer aus dem Vergleichsbeispiel 3 sowie dem erfindungsgemäßen blockierten Vernetzer aus Beispiel 4 sowie die Thermovergilbung beschrieben.

Für die Herstellung der Klarlacke A und B werden die blockierten Vemetzer aus Beispiel 3 (Vergleichsbeispiel) und Beispiel 4 (erfindungsgemäß) mit einem hydroxylgruppenhaltigen Acrylat vermischt.

Bei dem Acrylat I handelt es sich um eine 75 %ige Lösung eines handelsüblichen Polyacrylatharzes in Xylol mit einem Hydroxylgruppengehalt der Lösung von 4,7 % (Desmophen A, Versuchsprodukt LS 2051 der Bayer AG, Leverkusen).

### 1. Klarlackaufbau

Die Klarlacke werden durch Mischen der obengenannten Polyolkomponente mit den Vernetzern aus den Beispielen 3 (→Klarlack A) und 4 (→Klarlack B) im Verhältnis ihrer Äquivalent-Gewichte (NCO/OH = 1) unter Zugabe eines Katalysators, wie nachfolgend aufgelistet, hergestellt.

| Klarlackrezeptur | Polyisocyanat | Polyolkomponente | | Katalyse Dibutylzinnlaurat |
|---|---|---|---|---|
| A | Beispiel 3 = 403 g | 363 g | Acrylat I | 0,77 g (0,1 %) |
| B | Beispiel 4 = 431,8 g | 363 g | Acrylat I | 0,79 g (0,1 %) |

### 2. Applikation, Thermovergilbung, Pendeldämpfung und Lösemittelfestigkeit

Die obigen Klarlacke werden auf Prüfbleche, die mit einem handelsüblichen, weißen Basislack (®Permacron Mischlack Serie 293 MB 501 weiß, von der Fa. Spies & Hecker/Köln) beschichtet sind, in einer Naßschichtdicke von ca. 120 bis 150 µm appliziert.

Die Prüfbleche werden anschließend für 30 Minuten bei 140°C im Trockenschrank eingebrannt. Danach erfolgt die erste Farbmessung nach der sogenannten CIE-LAB-Methode (DIN 6174). Je größer der hierbei ermittelte positive b-Wert ist, um so mehr hat sich der Klarlack verfärbt.

Hieran schließt sich der Überbrennvorgang mit 30 Minuten bei 160°C an, anschließend wird der Zuwachs der Gelbfärbung, der sogenannte Δb-Wert nach dem CIE-LAB-Farbsystem (DIN 6174) gemessen. Dieser Wert sollte für überbrennfeste Klarlacke möglichst nahe bei 0 sein.

Die Ergebnisse der Klarlacke A und B sind, wie folgt, zusammengefaßt.

| Klarlack | Thermovergilbung nach dem Einbrennvorgang (b) | Thermovergilbung nach dem Überbrennvorgang (Δb) | Schichtdicke (µm) |
|---|---|---|---|
| A | 1,4 | 1,0 | 55 |
| B | 0,9 | 1,6 | 55 |

Im Fall des Lackfilms B) ergibt die Summe der Einzelwerte b) und Δb) den Wert 2,5. Ein analoger Klarlack auf Basis eines analogen Butanonoxim-blockierten Polyisocyanats ergibt unter gleichen Versuchsbedingungen einen Wert b + Δb von 5,1.

Bezüglich Pendeldämpfung und Lösemittelfestigkeit weist der Klarlackfilm B (erfindungsgemäß) Werte auf, die denen des Klarlackes A (Vergleich) und eines weiteren analogen Klarlackes auf Basis Butanonoxim-blockierter Polyisocyanate überlegen sind.

| | |
|---|---|
| Klarlackfilm B (erfindungsgemäß) | 3,5-Dimethyl-1,2,4-triazol als Blockierungsmittel |
| Klarlackfilm A (Vergleich) | Mischblockierung (3,5-Dimethylpyrazol/1,2,4-Triazol |
| Klarlackfilm C (Vergleich) | Butanonoxim als Blockierungsmittel |

| Klarlackfilm | B | | A | | C | |
|---|---|---|---|---|---|---|
| Pendeldämpfung nach König (Schwingungen) | 143 | | 131 | | 111 | |
| Lösemittelfestigkeit * nach | a) | b) | a) | b) | a) | b) |
| a) 1 min b) 5 min Xylol | 0 | 0 | 1 | 2 | 2 | 3 |
| Methoxypropyl | 0 | 1 | 2 | 3 | 2 | 3 |
| - | | | | | | |
| Acetat | | | | | | |
| Essigester | 2 | 5 | 3 | 5 | 5 | 5 |
| Aceton | 5 | 5 | 5 | 5 | 5 | 5 |

| | | | | | | |
|---|---|---|---|---|---|---|
| * Noten: 0 (gut) - 5 (schlecht) | | | | | | |

## Patentansprüche

1. Organische Polyisocyanate mit mindestens zwei Isocyanatgruppen, deren Isocyanatgruppen zu mindestens 95 % in blockierter Form vorliegen, und die einen Gehalt an blockierten und gegebenenfalls freien Isocyanatgruppen (berechnet als NCO, MG = 42 g) von insgesamt 2 bis 26 % aufweisen, **dadurch gekennzeichnet, dass** als Blockierungsmittel 3,5-Dimethyl-1,2,4-triazol Verwendung findet.

2. Organische Polyisocyanate gemäß Anspruch 1, **dadurch gekennzeichnet, dass** es sich bei den den blockierten Polyisocyanaten zugrundeliegenden Polyisocyanaten um 2,4- und 2,6-Toluylendiisocyanat (TDI), 4,4'-Diphenylmethandiisocyanat (MDI) bzw. Roh-MDI, Xylylendiisocyanat (XDI), 1,4-Butandiisocyanat (BDI), 1,6-Hexandiisocyanat (HDI), 2,4(6)-Methylcyclohexyldiisocyanat, (H6TDI), 1-Isocyanato-3,3,5-trimethyl-5-isocyanatomethylcyclohexan (Isophorondiisocyanat, IPDI), 4,4'-Dicyclohexylmethandiisocyanat, 3(4)-Isocyanatomethyl-1-methylcyclohexylisocyanat (IMCI), sowie um von diesen sich ableitende Polyisocyanate mit Prepolymerstruktur oder Biuret-, Allophanat-, Isocyanurat-und/oder Uretdiongruppen handelt.

3. Organische Polyisocyanate gemäß Anspruch 1, **dadurch gekennzeichnet, dass** es sich bei den den blockierten Polyisocyanaten zugrundeliegenden Polyisocyanaten um Biuret-, Isocyanurat-, Allophanat- und/oder Uretdiongruppen aufweisende (cyclo)aliphatische Lackpolyisocyanate auf Basis von 1,6-Diisocyanatohexan (HDI), 1-Isocyanato-3,3,5-trimethyl-5-isocyanatomethylcyclohexan (IPDI) und/oder 4,4'-Diisocyanato-dicyclohexylmethan handelt.

4. Organische Polyisocyanate gemäß Anspruch 1, **dadurch gekennzeichnet, dass** es sich bei den den blockierten Polyisocyanaten zugrundeliegenden Polyisocyanaten um Isocyanurat-, Allophanat- und/oder Biuretgruppen verfügende Lackpolyisocyanate auf Basis von 1,6-Hexandiisocyanat handelt.

5. Verfahren zur Herstellung von organischen Polyisocyanaten gemäß Anspruch 1, gegebenenfalls in in Lacklösemitteln gelöster Form, durch Umsetzung einer, gegebenenfalls in Lacklösemitteln gelösten Polyisocyanat-Komponente, bestehend aus mindestens einem Polyisocyanat mit einem Isocyanatgehalt von 2 bis 60 Gew.-%, mit einem Blockierungsmittel bei Temperaturen von 50 bis 120°C, wobei das Blockierungsmittel in einer Gesamtmenge von mindestens 95 Äquivalent-%, bezogen auf die Isocyanatgruppen der zu blockierenden Polyisocyanate, zur Anwendung gelangt, **dadurch gekennzeichnet, dass** als Blockierungsmittel 3,5-Dimethyl-1,2,4-triazol Verwendung findet.

6. Blockierte Polyisocyanate erhältlich nach Anspruch 5.

7. Verwendung der blockierten organischen Polyisocyanate gemäß Anspruch 1 als Vernetzer für organische Polyhydroxyl-, Polyamino- und Polyaminopolyhydroxylverbindungen in Polyurethan-Einkomponenten-Einbrennlacken.

8. Polyurethan - Einkomponenten Lackzubereitung enthaltend organische blockierte Isocyanate gemäß Anspruch 1.

9. Verfahren zur Beschichtung von Substraten, **dadurch gekennzeichnet, dass** ein Substrat mit einer Lackzubereitung gemäß Anspruch 8 beschichtet wird und das so beschichtete Substrat einer Wärmebehandlung bei Temperaturen oberhalb von 120°C unterzogen wird.

## Claims

1. Organic polyisocyanates having at least two isocyanate groups, at least 95% of whose isocyanate groups are in blocked form, which contain in total from 2 to 26% of blocked and optionally free isocyanate groups (calculated as NCO, MW = 42 g), **characterized in that** the blocking agent used is 3,5-dimethyl-1,2,4-triazole.

2. Organic polyisocyanates according to Claim 1,
**characterized in that** the polyisocyanates on which the blocked polyisocyanates are based are 2,4- and 2,6-tolylene diisocyanate (TDI), 4,4'-diphenylmethane diisocyanate (MDI) or crude MDI, xylylene diisocyanate (XDI), 1,4-butane diisocyanate (BDI), 1,6-hexane diisocyanate (HDI), 2,4(6)-methylcyclohexyl diisocyanate (H6TDI), 1-isocyanato-3,3,5-trimethyl-5-isocyanatomethylcyclohexane (isophorone diisocyanate, IPDI), 4,4'-dicyclohexylmethane diisocyanate, 3(4)-isocyanotomethyl-1-methylcyclohexyl isocyanate (IMCI), and polyisocyanates which derive from these and have a prepolymer structure or biuret, allophanate, isocyanurate and/or uretdione groups.

3. Organic polyisocyanates according to Claim 1,
**characterized in that** the polyisocyanates on which the blocked polyisocyanates are based are (cyclo)-aliphatic paint polyisocyanates which are based on 1,6-diisocyanatohexane (HDI), 1-isocyanato-3,3,5-trimethyl-5-isocyanatomethylcyclohexane (IPDI) and/or 4,4'-diisocyanatodicyclohexylmethane and contain biuret, isocyanurate, allophanate and/or uretdione groups.

4. Organic polyisocyanates according to Claim 1,
**characterized in that** the polyisocyanates on which the blocked polyisocyanates are based are paint polyisocyanates based on 1,6-hexane diisocyanate which have isocyanurate, allophanate and/or biuret groups.

5. Process for preparing organic polyisocyanates according to Claim 1, optionally in solution in paint solvents, by reacting a polyisocyanate component, optionally in solution in paint solvents and consisting of at least one polyisocyanate having an isocyanate content of from 2 to 60% by weight, with a blocking agent at temperatures of from 50 to 120°C, the blocking agent being employed in a total amount of at least 95 equivalent%, based on the isocyanate groups of the polyisocyanates to be blocked, **characterized**
**in that** 3,5-dimethyl-1,2,4-triazole is used as blocking agent.

6. Blocked polyisocyanates obtainable according to Claim 5.

7. Use of the blocked organic polyisocyanates according to Claim 1 as crosslinkers for organic polyhydroxy, polyamino and polyamino-polyhydroxy compounds in one-component polyurethane baking varnishes.

8. One-component polyurethane coating formulation comprising organic blocked isocyanates according to Claim 1.

9. Method of coating substrates, **characterized in that** a substrate is coated with a coating formulation according to Claim 8 and the substrate thus coated is subjected to a heat treatment at temperatures above 120°C.

## Revendications

1. Polyisocyanates organiques avec au moins deux groupes isocyanates dont les groupes isocyanates sont présents jusqu'à au moins 95 % dans une forme bloquée, et qui présentent une teneur en groupes isocyanates bloqués et éventuellement libres (calculés comme NCO, MG = 42 g) au total de 2 à 26 %, **caractérisés en ce que** l'on utilise comme agent de blocage du 3,5-diméthyl-1,2,4-triazole.

2. Polyisocyanates organiques selon la revendication 1, **caractérisés en ce qu'**il s'agit pour les polyisocyanates formant la base des polyisocyanates bloqués de diisocyanates de 2,4- et 2,6-toluylène (TDI), de diisocyanate de 4,4'-diphénylméthane (MDI) respectivement de MDI brut, de diisocyanate de xylylène (XDI), de diisocyanate de 1,4-butane (BDI), de diisocyanate de 1,6-hexane (HDI), de diisocyanate de 2,4(6)-méthylcyclohexyl (H6TDI), de 1-isocyanato-3,3,5-triméthyl-5-isocyanatométhylcyclohexane (diisocyanate d'isophorone, IPDI), de diisocyanate de 4,4'-dicyclohexylméthane, de 3(4)-isocyanatométhyl-1-méthylcyclohexylisocyanate (IMCI) ainsi que de polyisocyanates dérivés de ceux-ci avec une structure prépolymère ou des groupes biuret, allophanate, isocyanurate et/ou uretdion.

3. Polyisocyanates organiques selon la revendication 1, **caractérisés en ce qu'**il s'agit pour les polyisocyanates formant la base des polyisocyanates bloqués de polyisocyanates de laques cyclo(aliphatiques) présentant des groupes biuret, isocyanurate, allophanate et/ou uretdion à base de 1,6-diisocyanatohexane (HDI), de 1-isocyanato-3,3,5-triméthyl-5-isocyanatométhylcyclohexane (IPDI) et/ou de 4,4'-diisocyanatodicyclohexylméthane.

4. Polyisocyanates organiques selon la revendication 1, **caractérisés en ce qu'**il s'agit pour les polyisocyanates formant la base des polyisocyanates bloqués de polyisocyanates de laques fournissant des groupes isocyanurate, allophanate et/ou biuret à base de diisocyanate de 1,6-hexane.

5. Procédé pour la préparation de polyisocyanates organiques selon la revendication 1 éventuellement dans une forme dissoute dans des solvants de laques, par réaction d'un constituant polyisocyanate dissous éventuellement dans des solvants de laques, constitué d'au moins un polyisocyanate avec une teneur en isocyanate de 2 à 60 % en poids, avec un agent de blocage à des températures de 50 à 120°C, l'agent de blocage étant appliqué dans une quantité totale d'au moins 95 % d'équivalent, rapportés aux groupes isocyanate des polyisocyanates à bloquer, **caractérisé en ce que** l'on utilise comme agent de blocage du 3,5-diméthyl-1,2,4-triazole.

6. Polyisocyanates bloqués obtenus selon la revendication 5.

7. Utilisation des polyisocyanates organiques bloqués selon la revendication 1 comme agents de réticulation pour des composés organiques polyhydroxyle, polyamino et polyaminopolyhydroxyle dans des laques à cuire monoconstituantes de polyuréthanne.

8. Préparation de laques monoconstituantes de polyuréthane contenant des isocyanates organiques bloqués selon la revendication 1.

9. Procédé pour le revêtement de substrats, **caractérisé en ce que** l'on recouvre un substrat avec une composition de laque selon la revendication 8 et on soumet le substrat ainsi revêtu à un traitement thermique à des températures supérieures à 120°C.
